# EUROPEAN PATENT APPLICATION

(11) **EP 4 056 918 A1**
(43) Date of publication of application: **14.09.2022**
(21) Application number: 21161993.7
(22) Date of filing: 11.03.2021
(51) Int. Cl.: F24H 1/00, F24H 1/18, F24H 1/20, F24H 9/16

(54) **LIQUID TANK DEVICE**

(71) Applicant: Brita GmbH, 65232 Taunusstein (DE)
(72) Inventor: MACHUI, Oliver, 61352 Bad Homburg (DE); STIEHL, Gregor, 65597 Hünfelden (DE)

(57) **Abstract**

A liquid tank device (1) comprises a tank housing (2) for storing a liquid (11) within a tank volume (3) inside of the tank housing (2) and further comprises at least one conduit (4, 5, 15) for the liquid (11) that is connected in a liquid-tight manner to a corresponding opening (7, 8, 16, 17) within the tank housing (2) such that the liquid (11) can be supplied to or removed from the tank volume (3) within the tank housing (2) through the opening (7, 8, 16, 17). The liquid tank device (1) also comprises a containment housing (19), whereby the containment housing (19) is arranged on an outer side of the tank housing (2) in such a way that it surrounds at least one opening (8, 16) and an adjacent section (18) of the at least one conduit (4, 5, 15). The containment housing (19) can comprise an opening (23) for the conduit (4, 5, 15) or for a power line (12) that runs through the corresponding opening (8, 16, 13) of the tank housing (2) into the containment housing (19). The containment housing (15) confines in a liquid-tight manner a containment volume (17) for any liquid (11) leaking in the vicinity of the opening (7, 8, 13) of the tank housing (2).

## Description

### Technical Field

The invention relates to a liquid tank device with a tank housing for storing a liquid within a tank volume inside of the tank housing and with at least one conduit for the liquid that is connected in a liquid-tight manner to an opening within the tank housing such that the liquid can be supplied to or removed from the tank volume within the tank housing through the opening.

### Background of the invention

Liquid tank devices are widely used for storing or transporting liquids. The liquid is filled and stored inside a tank volume within a tank housing. The tank housing is designed to confine the liquid within and to prevent unintentional leakage from the liquid. The liquid can be filled into or removed from the tank volume through at least one opening in the tank housing. During transport or non-use of the liquid tank device, any opening of the tank housing can be closed by a lid or cover that prevents any unwanted leakage of the liquid.

A liquid tank device that is used stationary for holding a liquid is usually connected to at least one conduit that allows to fill or remove a liquid from the tank volume within the tank housing. Each conduit can be a dimensionally stable tube made from e.g. metal or plastic, or a flexible or elastic hose that can be deformed and adapted to environmental conditions or use requirements related to the liquid tank device and other devices that are connected via the conduit.

The liquid can be stored inside the tank without added pressure. Thus, there will be only gravitational forces that generate pressure within the tank volume. For other applications it might be advantageous to add additional pressure e.g. for heating the liquid within the tank volume or for dispensing the liquid by exerting additional pressure.

Usually, the tank housing and any conduits that are connected to the tank housing can easily withstand the liquid pressure within the tank volume and within the conduit. Furthermore, the tank housing and the conduits can be made of a material that withstands any degradation or the usual mechanical load that is expected during the service life of the liquid tank device in such a manner that any unwanted perforation of the tank housing or the connected conduits is very rare. Nevertheless, for some applications like e.g. storing dangerous chemicals within the tank volume additional safety measures are required. In order to avoid any uncontrolled leakage of the liquid into the environment or possible contamination of the environment, it is known to arrange a leakage pan under the tank housing or to place the tank housing within the leakage pan. Any leakage from the tank housing then flows into the leakage pan. If the volume of the leakage pan is larger than the tank volume, all of the liquid that has been filled into the tank volume can be collected and withheld inside the leakage pan, preventing uncontrolled leakage of the liquid into the environment.

However, for some applications it is not possible to make use of a leakage pan with a volume that is large enough to confine the maximum amount of liquid that can be filled into and stored within the tank volume.

Accordingly, there is a need for a liquid tank device that allows to prevent an unwanted leakage of the liquid but that does not require an additional volume that is approximately the same or larger than the tank volume within the tank housing.

### Summary of the invention

The present invention relates to a liquid tank device as described at the beginning, whereby the liquid tank device also comprises a containment housing, whereby the containment housing is arranged on an outer side of the tank housing in such a way that it surrounds at least one opening and an adjacent section of the at least one conduit, and whereby the containment housing confines in a liquid-tight manner a containment volume for any liquid leaking in the vicinity of the at least one opening of the tank housing. In most cases of unwanted leakage of liquid from a liquid tank device with connected conduits, it is usually the connection of the conduit to the tank housing that is the weak point which is responsible for any unwanted leakage of the liquid from the tank volume to the outside. By providing a containment housing that confines a containment volume that surrounds the opening and the adjacent section of the corresponding conduit that is connected to this opening, any leakage of the liquid from this area of transition from the tank volume inside the tank housing into the inside of the conduit will leak into the containment volume and will be reliably confined within the containment volume.

Due to the liquid-tight confinement of any leakage of liquid within the containment housing, the containment volume can be smaller than the tank volume of the tank housing. Thus, in most cases the unintentional leakage of liquid from the liquid tank device can be avoided and any unwanted leakage of liquid into the environment can be reliably prevented. The additional space requirement is much smaller compared to the widespread use of conventional leakage pans.

According to an advantageous embodiment of the invention, the containment volume is less than 50% of the tank volume, preferably less than 20% of the tank volume, and most preferably less than 10% of the tank volume. Basically, the containment volume only needs to be large enough to surround all of the at least one opening within the tank housing and the beginning of the at least one conduit that is attached to the tank housing and connected with the corresponding opening. Thus, the volume of the containment volume can be very small and in particular considerably smaller than the tank volume that defines the maximum volume of the liquid that can be filled into and stored within the liquid tank device. The containment housing surrounds the area of transition from the tank housing into the conduit and thus protects the region of the tank housing that is the part of the liquid tank device which is the most susceptible to leakage.

In yet another aspect of the invention the liquid tank device comprises an input conduit and an output conduit, whereby the input conduit is connected to an input opening within the tank housing and whereby the output conduit is connected to an output opening within the tank housing. Thus, providing separate conduits for filling and for dispensing liquid into and from the tank volume facilitates any operative connection of the liquid tank device with additional devices like e.g. pumps or valves that are used for controlling the filling or draining of liquid into or from the tank volume. Furthermore, it is possible to fill liquid into the tank volume and at the same time to dispense liquid from the tank volume.

It is possible to provide for a form-fitting or substance-fitting mounting of the respective end of the conduit with the corresponding opening. Each opening of the tank housing can be surrounded by a flange that can be used for the attachment of the corresponding conduit to the respective opening. If the tank housing and the conduit are made of a same material like e.g. steel or at least of a matching material that allows for welding, the end of the conduit can be welded with the tank housing surrounding the corresponding opening, or with a flange that is attached to the tank housing and surrounds the opening.

For most applications it is considered advantageous that the opening for the at least one conduit is located at a bottom side of the tank housing, and that the containment housing is arranged at the bottom side of the tank housing. Thus, dispensing an amount of liquid from the tank volume can be initiated and performed without need for additional forces or pressure that is applied within the tank volume. For most applications the gravitational forces will cause the liquid to flow through the opening and into the conduit that is arranged at the bottom side of the tank housing. Furthermore, any liquid that leaks from the tank volume tends to flow to the bottom side of the tank housing. However, in case of e.g. unusual space restrictions that must be met by the liquid tank device it is also possible to arrange the openings and conduits as well as the surrounding containment housing at any side of the tank housing or at any part of the outer surface of the tank housing, as the containment housing is not an open pan, but provides for a liquid-tight confinement of the leaking liquid within the containment volume.

In case that a self-priming pump is used for dispensing water through the outlet conduit, such a self-priming pump can be arranged at a top side or above the tank volume or the tank housing, and any conduit that is required for filling the liquid into the tank volume or for removing the liquid from the tank volume can also be arranged a the top side of the tank housing, which reduces the risk of any unwanted leakage of liquid through the corresponding openings. However, for many liquid tank devices a non self-priming pump is considered advantageous, which must be arranged below the tank volume in order to be fed by liquid that flows downward to the non self-priming pump due to gravitational force. Thus, at least one opening of the tank housing that allows for connecting a conduit to the pump is arranged at a lower region or within the bottom of the tank housing. Preferably, such a pump and in particular a non self-priming pump is arranged within the containment housing. In case that any leakage of fluid occurs at a fluid connection with the pump, the spilling of the leakage is limited to inside the containment housing and unwanted leakage outside the liquid tank device is avoided.

According to an advantageous embodiment of the invention, the outlet conduit runs into a pump that delivers the liquid through a discharge conduit for subsequent dispensing of the liquid from the liquid tank device, whereby the pump is arranged below the tank volume and whereby the discharge conduit runs upward until above the tank volume. The discharge conduit may be arranged e.g. outside the tank volume, but within the tank housing. It is also possible and usually preferred to pass the discharge conduit through the tank volume, i.e. to enter the tank volume at the bottom of the tank volume and to exit the tank volume at the top of the tank volume. Then the risk of unwanted leakage through the discharge conduit is significantly reduced, as the additional opening at the bottom of the tank volume is surrounded by the containment housing and the discharge conduit does not require an opening within the containment housing, which facilitates a fully sealed and liquid-tight design of the containment housing.

However, it might be considered advantageous for some embodiments to arrange a conduit or e.g. a power line in such a manner as to exit the containment housing through an opening of the containment housing. In this case the containment housing comprises an opening for a conduit or for a power line that runs through the opening of the tank housing into the containment housing. Then, in addition to a liquid-tight sealing of the opening within the tank housing, a second liquid-tight sealing can be provided at the opening within the containment housing. The risk of a failure of two liquid-tight sealings is significantly smaller than the risk of a failure of only one liquid-tight sealing. Furthermore, it is considered much simpler to provide for a liquid-tight sealing for the opening within the containment housing through which a conduit passes than to provide for a liquid-tight sealing of the connection of the open end of the conduit with the corresponding opening within the tank housing.

According to an advantageous aspect of the invention, the outlet of the containment housing comprises a sealing that is pressure resistant up to a maximum liquid pressure generated within the tank volume. The outlet of the containment housing is required for allowing the conduit to exit the containment housing. In order to provide for a liquid-tight confinement of leaked liquid within the containment volume, the sealing should reliably retain the liquid within the containment volume and prevent any further leakage into the environment. In case that the liquid tank device is used as pressure-less tank, i.e. without application of additional pressure to the liquid within the tank volume, the only pressure that is generated within the tank volume is generated by gravitational forces. The maximum pressure that can be generated by gravitational forces depends on the maximum filling height of the liquid within the tank volume inside the tank housing. Usually, such a maximum pressure is considered small and will not result in excessive efforts that are required to provide for a pressure-tight sealing of the outlet of the containment housing.

For some liquid tank devices there is continuously or at intervals additional pressure applied within the tank volume, e.g. by a pump generating pressure or by a heating device that heats the liquid within the tank volume and causes a heating-induced expansion of the liquid. In case that the containment volume is completely filled by the leaking liquid, the additional pressure may also apply within the containment volume. Thus, the sealing of the outlet of the containment housing is preferably designed to also withstand such an additional pressure.

If the containment housing comprises more than one outlet, each of the outlets are sealed in a manner to withstand the usually expected pressure that will be applied within the containment volume. It is possible to make use of one common sealing means for all outlets, or to provide a separate and dedicated seal for each of the outlets.

In yet another aspect of the invention the connection of the containment housing with the tank housing is designed to be pressure resistant up to a maximum liquid pressure generated within the tank volume. In addition to the one or more outlets of the containment housing, it is usually the connection of the containment housing with the tank housing and the transition area between the containment housing and the tank housing that may be susceptible to fissures or cracks. Thus, an additional sealing can be arranged in this transition area that prevents unwanted leakage of the pressurized liquid from the transition area between the containment housing and the tank housing. If both housings are made of metal, such an additional sealing can be provided by a welding seam that runs along the connection of the containment housing with the tank housing. It is also possible to mount an elastic and liquid-tight sealing ring or sealing seam along this connection, which also enables for a sealed, but detachable connection of the containment housing with the tank housing.

In order to be able to detect an unwanted leakage of liquid into the containment volume within the containment housing, a liquid leakage detection device can be arranged inside the containment housing. For example, the liquid leakage detection device can be a liquid sensor that is arranged at a bottom region within the containment volume. The liquid leakage detection device can also be a humidity probe that detects an increase of humidity within the containment volume. If such a liquid leakage detection device signals the occurrence of a liquid leakage, the liquid tank device can be removed from service in order to perform some maintenance or repairing. In case that the containment housing is detachably mounted to the tank housing, it is possible to detach the containment housing and to check the tank housing for any damage that might cause the unwanted leakage of the liquid.

According to yet another aspect of the invention, the liquid tank device comprises a heating device arranged inside the tank housing for heating the liquid within the tank volume. The liquid tank device can be a boiler that is designed and used for providing hot water for use e.g. in a kitchen or in a bathroom. The tank volume of such a boiler is usually in the range of a few liters up to a few hundred liters. Such boilers are installed in many households and often within living areas. Repeated or continuous heating of the liquid within a boiler results in an increased strain on the tank housing and all connections with conduits or other components, which will increase the risk for an unwanted leakage of water from the boiler. Any leakage of water from such boilers will then cause significant damage within the living areas and should be avoided. Due to the small space requirements for the containment housing, the present invention is considered very advantageous for use with such boilers.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 illustrates a schematic sectional view of a liquid tank device that can be used as a boiler,
Figure 2 illustrates another embodiment of the liquid tank device shown in figure 1.

A liquid tank device 1 that is shown in both figures comprises a tank housing 2 that confines a tank volume 3 inside of the tank housing 2. Two conduits 4, 5, namely an input conduit 4 and an output conduit 5 are attached to corresponding flanges 6 around an input opening 7 and an output opening 8 within the tank housing 2. Inside of the tank housing 2 there is a heating device 9 comprising an electrical heating coil 10 that can be used for heating a liquid 11 that is filled into the tank volume 3 via the input conduit 4. The liquid 11 and preferably the heated liquid 11 can be removed from the tank volume 3 via the output conduit 5. Power for the heating device 9 is supplied via a power line 12 that runs through another opening 13 in the tank housing 2.

The liquid tank device 1 also comprises a non self-priming pump 14 that is mounted below the tank volume 3 within the tank housing 2. The output conduit 5 runs into the pump 14 and feeds the liquid from the tank volume 3 into the pump 14. An output side of the pump 14 is connected with and runs into a discharge conduit 15. The discharge conduit 15 runs back into the tank volume 3 and passes through the tank volume 3 within the tank housing 2. The discharge conduit 15 then runs into a discharge opening for dispensing the liquid 11 from the liquid tank device 1. In order to pass through the tank volume 3, the tank housing 2 comprises an additional input opening 16 next to the output opening 8 and an additional output opening 17 located next to the input opening 7.

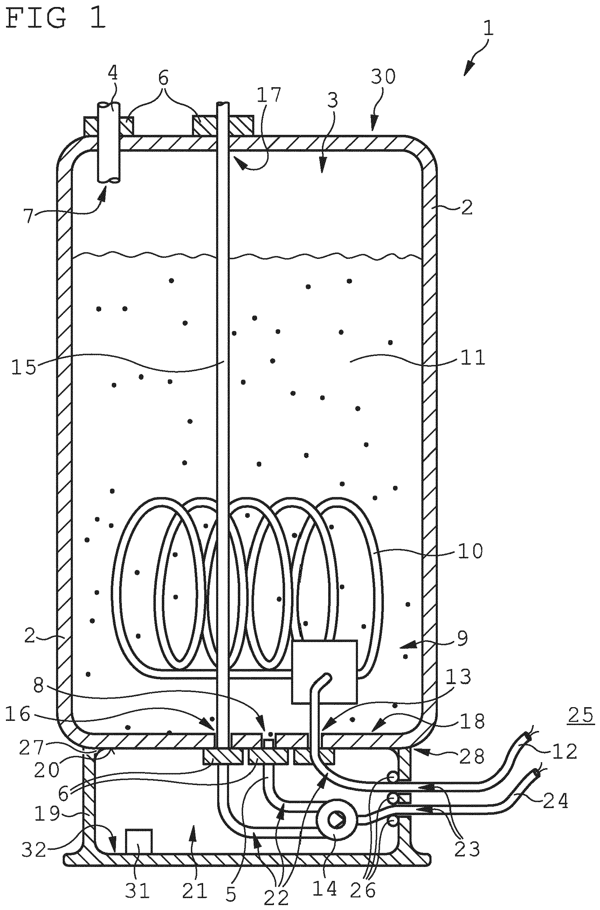

Referring to a first embodiment of the liquid tank device 1 that is illustrated in figure 1, the opening 13 for the power line 12 of the heating device 9 is located at a bottom 18 of the tank housing 2. Furthermore, the output opening 8 for the output conduit 5 and the input opening 16 for the discharge conduit 15 are also located at the bottom 18 of the tank housing 2 and close to each other. Each opening 13, 8, 16 is sealed by a corresponding flange 6 in a liquid-tight manner.

The liquid tank device 1 also comprises a containment housing 19 that is arranged at the bottom side 18 of the tank housing 2 and connected to an outer surface 20 of the tank housing 2 in a liquid-tight manner. The containment housing 19 confines a containment volume 21 that surrounds all openings 8, 13, 16 located at the bottom side 18 of the tank housing 2 as well as adjacent sections 22 of the respective conduits 5, 15 and the power line 12 that either runs into the corresponding opening 8 or that pass through the openings 13, 16.

The containment housing 19 of the first embodiment that is illustrated in figure 1 comprises separate openings 23 the power line 12 of the heating device 9 as well as for a power line 24 of the pump 14. The power lines 12, 24 are led through the openings 23 of the containment housing 19 from the containment volume 21 inside the containment housing 19 to the outside 25 of the liquid tank device 1. Each opening 23 is sealed by a sealing 26 that is designed to withstand a pressure generated within the tank volume 3 that is caused by gravitational forces as well as due to heating of the liquid 11 by the heating device 9. An additional sealing 27 runs along a connection 28 between the containment housing 19 and the tank housing 2.

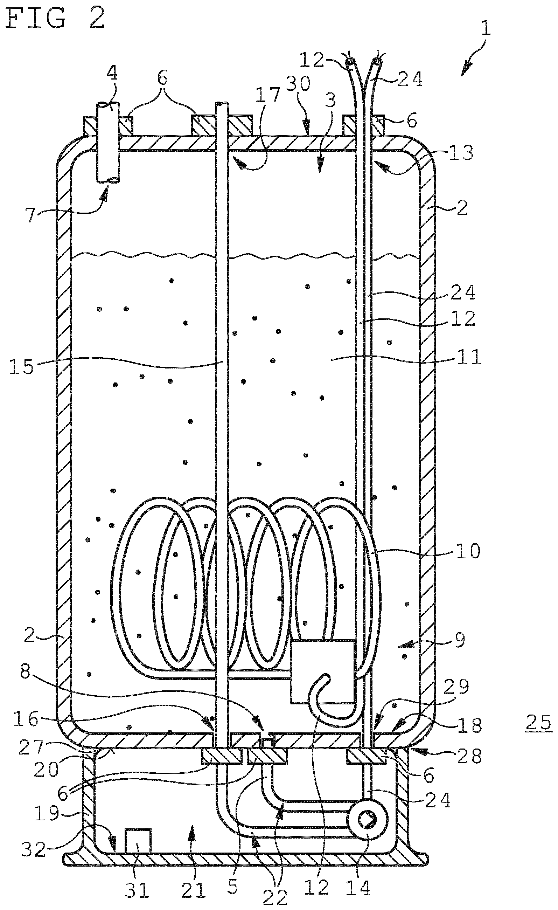

Referring to a second embodiment of the liquid tank device 1 that is illustrated in figure 2, the power line 24 of the pump 14 also passes through the tank volume 3. Thus, the power line 24 passes through a power line opening 29 from the containment volume 21 into the tank volume 3. Both, the power line 12 of the heating device 9 and the power line 24 of the pump 14 are joined together and run up to a top 30 of the tank housing 2. Both power lines 12, 24 exit the tank housing 2 through the power line opening 13 at the top 30 of the tank housing 2. The containment housing 19 of the second embodiment shown in figure 2 does not comprise any openings, which facilitates a liquid-tight design of the containment housing 19 and its connection to the tank housing 2.

The liquid tank device 1 also comprises a liquid sensor 31 that is arranged at a bottom side 32 of the containment housing 19 within the containment volume 21. The liquid sensor 31 is used as a liquid leakage detection device that emits a signal indicating an amount of liquid 11 that leaks from the tank volume 3 into the containment volume 21 within the containment housing 19.

## Claims

1. Liquid tank device (1) with a tank housing (2) for storing a liquid (11) within a tank volume (3) inside of the tank housing (2) and with at least one conduit (4, 5, 15) for the liquid (11) that is connected in a liquid-tight manner to a corresponding opening (7, 8, 16, 17) within the tank housing (2) such that the liquid (11) can be supplied to or removed from the tank volume (3) within the tank housing (2) through the opening (7, 8, 16, 17), **characterized in that** the liquid tank device (1) also comprises a containment housing (19), whereby the containment housing (19) is arranged on an outer side of the tank housing (2) in such a way that it surrounds at least one opening (8, 16) and an adjacent section (22) of the at least one conduit (4, 5, 15), and whereby the containment housing (19) confines in a liquid-tight manner a containment volume (21) for any liquid (11) leaking in the vicinity of the at least one opening (8, 16) of the tank housing (2).

2. Liquid tank device (1) according to claim 1, **characterized in that** the containment volume (21) is less than the tank volume (3), preferably less than 20% of the tank volume (3), and most preferably less than 10% of the tank volume (3).

3. Liquid tank device (1) according to claim 1 or claim 2, **characterized in that** the opening (8, 16) for the at least one conduit is located at a bottom side (14) of the tank housing (2), and that the containment housing (19) is arranged at the bottom side (18) of the tank housing (2).

4. Liquid tank device (1) according to one of the preceding claims, **characterized in that** the liquid tank device (1) comprises an input conduit (4) and an output conduit (5), whereby the input conduit (4) is connected to an input opening (7) within the tank housing (2) and whereby the output conduit (5) is connected to an output opening (8) within the tank housing (2).

5. Liquid tank device (1) according to one of the preceding claims, **characterized in that** the output conduit (5) runs into a pump (14) that delivers the liquid (11) through a discharge conduit (15) for subsequent dispensing of the liquid (11) from the liquid tank device (1), whereby the pump (14) is arranged below the tank volume (3) and whereby the discharge conduit (15) runs upward until above the tank volume (3).

6. Liquid tank device (1) according to one of the preceding claims, **characterized in that** the containment housing (19) comprises an opening (23) for a conduit (4, 5, 15) or for a power line (12, 24) that runs through the opening (13) of the tank housing (2) into the containment housing (19).

7. Liquid tank device (1) according to claim 6, **characterized in that** the opening (23) of the containment housing (19) comprises a sealing (26) that is pressure resistant up to a maximum liquid pressure generated within the tank volume (3).

8. Liquid tank device (1) according to one of the preceding claims, **characterized in that** a connection (28) of the containment housing (19) with the tank housing (2) is designed to be pressure resistant up to a maximum liquid pressure generated within the tank volume (3).

9. Liquid tank device (1) according to one of the preceding claims, **characterized in that** a liquid leakage detection device is arranged inside the containment housing (19) for detecting any leakage of liquid (11) into the containment housing (19).

10. Liquid tank device (1) according to one of the preceding claims, **characterized in that** the liquid tank device (1) comprises a heating device (9) arranged inside the tank housing (2) for heating the liquid (11) within the tank volume (3).
